# EUROPÄISCHE PATENTSCHRIFT

(11) **EP 3 494 296 B1**
(45) Veröffentlichungstag und Bekanntmachung des Hinweises auf die Patenterteilung: **09.12.2020**
(21) Anmeldenummer: 17745291.9
(22) Anmeldetag: 18.07.2017
(51) Int. Cl.: F01N 3/20, F01N 3/28

(54) **WABENKÖRPER**
HONEYCOMB BODY
CORPS EN NID D'ABEILLES

(30) Priorität: 04.08.2016 DE 102016214489
(43) Veröffentlichungstag der Anmeldung: 12.06.2019
(73) Patentinhaber: Vitesco Technologies GmbH, 30165 Hannover (DE)
(72) Erfinder: HIRTH, Peter, 51503 Rösrath (DE); PABST, Christoph, 49326 Melle (DE)
(86) Internationale Anmeldenummer: PCT/EP2017/068067
(87) Internationale Veröffentlichungsnummer: WO 2018/024478

(56) Entgegenhaltungen:
- DE-A1- 4 343 705
- JP-A- H08 103 663
- US-A- 5 505 911

## Beschreibung

Die vorliegende Erfindung betrifft das Gebiet der elektrisch beheizbaren Wabenkörper, insbesondere für den Einsatz bei der Abgasreinigung von Verbrennungskraftmaschinen, vorzugsweise in Kraftfahrzeugen. Elektrisch beheizbare Wabenkörper werden hauptsächlich bei Kraftfahrzeugen als von Abgas durchströmbare Katalysator-Trägerkörper eingesetzt, die bei bestimmten Betriebsbedingungen, z. B. bei einem Kaltstart, elektrisch beheizt werden, um schnell eine für katalytische Reaktionen geeignete Temperatur zu erreichen, bzw. diese auch bei ungünstigen Bedingungen beizubehalten.

Elektrisch beheizbare Wabenkörper und deren Komponenten müssen trotz hoher thermischer Wechselbelastungen, aggressiver Umgebungsbedingungen und möglicher Ablagerungen eine lange Lebensdauer bei gleichbleibender elektrischer Funktion erreichen, was hohe Anforderungen an die Materialien und Konstruktion stellt.

Bei neueren Entwicklungen werden statt der in Kraftfahrzeugen bisher weithin üblichen 12 V [Volt] im Versorgungsnetz auch Systeme mit einer Versorgungsspannung von 24, 36 oder sogar 48 V in Betracht gezogen. Dies stellt auch besondere Anforderungen an elektrische Isolierungen und den zu wählenden elektrischen Widerstand in elektrisch beheizbaren Wabenkörpern. Bei höheren Spannungen ist es kaum noch möglich, einen Wabenkörper als Ganzes als Heizwiderstand zu gestalten. Es müssen gesonderte Heizelemente vorgesehen werden.

Aus der EP 0 618 842 B1 ist ein elektrisch beheizbarer Wabenkörper bekannt, bei dem nur eine elektrisch isoliert in einer Haltestruktur gelagerte Innenstruktur beheizbar ist, wodurch ein geeigneter elektrischer Widerstand und eine haltbare Konstruktion erreicht werden soll.

Aus der US 2014/0112850 A1 (WO 2012/172033) ist weiterhin schon eine Konstruktion bekannt, die für Spannungen von 24 V oder höher geeignet ist. Bei dieser Konstruktion werden Teile der einen Wabenkörper bildenden Blechlagen als Heizelemente benutzt und in geeigneten Isolierungen gehalten.

Aus der EP 0 603 227 B1 ist es auch bereits bekannt, einen gesonderten flächigen elektrischen Leiter zwischen zwei miteinander verklammerten Folien anzuordnen. Diese Anordnung erfordert allerdings einen relativ großen Aufwand und führt zu nur relativ schwer zu Wabenkörpern zu verarbeitenden geschichteten Folien.

Aus der US 5,505,911 ist außerdem ein elektrisch beheizbarer Wabenkörper bekannt, bei dem elektrische Leiter in besonderen Formen als Beschichtung auf eine Trägerstruktur aufgebracht sind. Diese Schrift beschreibt zwar geeignete Möglichkeiten zur Kontaktierung solcher elektrisch leitender Beschichtungen, enthält aber weder für höhere Spannungen noch für typische moderne Bauformen von Wabenkörpern geeignete Komponenten. Daher ist es Aufgabe der vorliegenden Erfindung, eine metallische Folie mit einem aufgebrachten flächigen elektrischen Leiter zu schaffen, die sich zur Herstellung von elektrisch beheizbaren Wabenkörpern, insbesondere für einen Betrieb mit elektrischen Spannungen von 24 bis 48 V eignet. Weiter ist es Aufgabe der Erfindung einen unter Verwendung mindestens einer solchen Folie hergestellten elektrisch beheizbaren Wabenkörper anzugeben, insbesondere für die Verwendung in Abgasreinigungssystemen eines Kraftfahrzeuges.

Die DE 43 43 705 A offenbart ein Herstellungsverfahren für einen Katalysator, mit einer Vielzahl von zueinander parallelverlaufenden, aus einer zwischen zwei flächigen Folien angeordneten, gewellten Folie gebildeten Kanälen, wobei die flächigen und/oder die gewellten Folien zumindest teilweise mit einer katalytisch wirksamen Beschichtung versehen sind. Wobei zuerst zumindest eine der gewellten und die flächige Folie im metallischen Zustand aufeinandergelegt und an den Berührungsstellen punkt- und/oder linienförmig miteinander verschweißt werden und dass das durch das Schweißen erhaltene Paket gegebenenfalls montiert und danach mit der katalytisch wirksamen Schicht beschichtet wird. Weiterhin wird dieses Paket in Verbindung mit elektrisch beheizbaren Folien zu einer Einheit zusammengefügt.

Zur Lösung dieser Aufgabe dient eine metallische Folie gemäß der Beschreibung sowie ein Wabenkörper gemäß dem Anspruch 1. Vorteilhafte Ausgestaltungen, die einzeln oder in technisch sinnvoller Weise miteinander kombiniert angewendet werden können, sind in den jeweils abhängigen Ansprüchen angegeben.

Die metallische Folie weist auf ihrer Oberseite einen durch eine Basisisolierschicht elektrisch isoliert darauf angebrachten, flächigen elektrischen Leiter mit einer den Leiter abdeckenden elektrisch isolierenden Deckschicht auf, wobei die metallische Folie mindestens einen Randbereich ohne elektrischen Leiter und ohne Isolierschichten aufweist und wobei die Gesamtdicke des elektrischen Leiters mit Isolierschichten kleiner 80 µm, vorzugsweise kleiner als 60 µm ist. Die verhältnismäßig geringe Gesamtdicke des elektrischen Leiters mit den Isolierschichten erlaubt es, die metallische Folie ähnlich wie konventionelle Folien zu wickeln, mit anderen Folien zu schichten und zu einem Wabenkörper zu formen oder sogar zu strukturieren, insbesondere zu gewellten Folien. Ein flächiger elektrischer Leiter, auch Leiterband genannt, hat den besonderen Vorteil, dass er eine im Verhältnis zu seiner elektrisch leitenden Querschnittsfläche eine große Oberfläche pro Längeneinheit aufweist, wodurch im Leiter entstehende Ohm'sche Wärme gut abgeleitet werden kann, im vorliegenden Fall in die metallische Folie und durch die Deckschicht nach außen. Als flächiger Leiter kommt ebenfalls eine metallische Folie in Betracht oder auch eine metallische Beschichtung, die auf die Basisisolierschicht aufgebracht wird. Die Isolierschichten und der elektrische Leiter können auch beispielsweise nach bekannten CVD/PVD-Verfahren (Chemical Vapor Deposition / Physical Vapor Deposition) aufgebracht werden oder durch Drucken.

In einer bevorzugten Ausführungsform besteht die metallische Folie aus hochtemperaturbeständigem Stahl und hat eine für die axiale Länge von Wabenkörpern typische Breite von 5 bis 30 cm [Zentimeter], vorzugsweise 10 bis 20 cm, eine Foliendicke von 20 bis 100 µm [Mikrometer], vorzugsweise 25 bis 50 µm aufweist, wobei der mindestens eine Randbereich mindestens 0,5 cm breit ist. Mit diesen Maßen lassen sich unter Verwendung der metallischen Folie typische Wabenkörper herstellen, die an ihren Stirnseiten verlötete Verbindungen im Randbereich der metallischen Folie aufweisen.

Vorzugsweise sind die elektrischen Isolierungen so gestaltet und beschaffen, dass sie elektrische Überschläge bei Spannungen von 20 bis 72 V [Volt] sicher verhindern. Je nach Anwendungsfall muss die elektrische Durchschlagsfestigkeit der Isolierungen für die verwendeten Spannungen ausgelegt sein, also bei Systemen mit 24 V mindestens 24 V plus einen Sicherheitsaufschlag aushalten, bei 48 V mindestens 48 V plus einen Sicherheitsaufschlag für eventuell auftretende Überspannungen bei Schaltvorgängen und dergleichen. Bevorzugt ist die metallische Folie glatt oder gewellt mit einer für metallische Katalysatorträgerkörper geeigneten Struktur, wobei der mindestens eine Randbereich so angeordnet ist, dass er an einer Stirnseite eines aus der metallischen Folie hergestellten Wabenkörpers positioniert werden kann. Vorzugsweise sind zwei Randbereiche vorgesehen, die an beiden Stirnseiten eines Wabenkörpers zu liegen kommen.

Vorzugsweise ist der flächige elektrische Leiter in Länge, Querschnitt und Verlauf so gestaltet, dass er eine elektrische Leistung von 500 bis 5000 W aufnehmen kann. Für diese Gestaltung stehen verschiedene Parameter zur Verfügung, die geeignet kombiniert werden können. Die Länge des elektrischen Leiters kann z. B. durch mäanderförmigen Verlauf praktisch beliebig gewählt werden. Auch seine Dicke und Breite (also der Leiterquerschnitt) sind in weiten Grenzen wählbar. Dabei müssen Dicke und/oder Breite nicht überall gleich sein, sondern können je nach der gewünschten Temperaturverteilung auch bereichsweise unterschiedlich sein. Durch eine U-förmige oder mäanderförmige Gestaltung des elektrischen Leiters können dessen elektrische Anschlüsse zur Verbindung mit einer Stromversorgung an beliebige Orte verlegt werden. Bevorzugt hat der flächige Leiter eine Leiteroberfläche, die zwischen 10 und 80 %, vorzugsweise 30 bis 50% der Oberseite der : metallischen Folie bedeckt.

Der Vorteil der guten Wärmeübertragung durch eine große Oberfläche kann umso besser genutzt werden, je größer die Oberfläche des elektrischen Leiters im Verhältnis zur Fläche der metallischen Folie ist. Allerdings kann auch hier eine inhomogene Verteilung der Leiteroberfläche von Vorteil sein, beispielsweise, wenn ein Wabenkörper an seiner Eintrittsseite für Abgas stärker beheizt werden soll als in anderen Bereichen.

Die Erfindung betrifft einen von einem Gas von einer ersten Stirnseite zu einer zweiten Stirnseite durchströmbaren Wabenkörper, hergestellt unter Verwendung mindestens einer metallischen Folie, mit einer Oberseite und einem durch eine Basisisolierschicht elektrisch isoliert darauf angebrachten, flächigen elektrischen Leiter mit einer den Leiter abdeckenden elektrisch isolierenden Deckschicht, wobei die metallische Folie mindestens einen Randbereich ohne elektrischen Leiter und ohne Isolierschichten aufweist und wobei die Gesamtdicke des elektrischen Leiters mit Isolierschichten kleiner 80 µm ist und unter Verwendung mindestens einer weiteren metallischen Folie durch Wickeln und/oder abwechselndes Schichten der metallischen Folien, wobei die metallischen Folien an mindestens einer Stirnseite des Wabenkörpers untereinander verlötet sind. Wie erwähnt ist es möglich, die metallischen Folien als glatte oder als gewellte Folien herzustellen, so dass typische Wabenkörper, die bisher aus glatten und gewellten Folien hergestellt wurden, auch unter Verwendung der oben beschriebenen metallischen Folien als glatte und/oder gewellte Folien hergestellt werden können. Ob man gewellte oder glatte metallische Folien mit elektrischen Leitern benutzt und wie viele davon jeweils, hängt von der gewünschten Heizleistung und anderen konstruktiven Einzelheiten ab. Fertigungstechnisch ist nur die elektrische Kontaktierung der elektrischen Leiter, die im Allgemeinen durch ein den Wabenkörper umgebendes Mantelrohr hindurch erfolgt, zu berücksichtigen. Die durch die Anbringung des elektrischen Leiters und seiner Isolierschichten entstehende Verdickung der metallischen Folie ist so gering, dass der Druckverlust des Wabenkörpers kaum erhöht wird.

Besonders bevorzugt ist allerdings ein Wabenkörper, bei dem die mindestens eine metallische Folie mit elektrischem Leiter eine glatte Folie ist, die zusammen mit mindestens einer benachbart angeordneten gewellten metallischen Folie mit Wellenbergen und Wellentälern den Wabenkörper bildet, wobei die mindestens eine gewellte metallische Folie in einem inneren Bereich, in dem die metallische Folie mit dem elektrischen Leiter und dessen Isolierungen dicker ist, eine um diese Gesamtdicke geringere Wellhöhe hat als in einem Randbereich der gewellten metallischen Folie, so dass sich im Randbereich der gewellten metallischen Folie an den Wellenbergen und den Wellentälern metallische Kontakte mit dem Randbereich der glatten metallischen Folie ergeben, die durch Löten verbunden sind. Obwohl die Gesamtdicke des elektrischen Leiters mit seinen Isolierungen im Vergleich zu den anderen Dimensionen in einem Wabenkörper keine besonderen Probleme bei der Fertigung aufwirft, ist es doch von Vorteil, wenn man diese Dicke durch eine geeignete Modifizierung der Wellhöhe einer benachbarten gewellten Lage ausgleicht, weil dann gut verlötbare metallische Kontaktstellen an der oder den Stirnseite(n) des Wabenkörpers entstehen.

Auf diese Weise ist es möglich, mehrere glatte und gewellte metallische Folien, von denen mindestens eine einen elektrischen Leiter aufweist, abwechselnd aufeinander geschichtet und untereinander verschlungen zu einem Wabenkörper zu formen, wie er im Stand der Technik in verschiedenen Ausführungsformen bekannt ist. Weitere Einzelheiten und Ausführungsbeispiele der Erfindung werden im Folgenden anhand der Zeichnung näher beschrieben, wobei auch in verschiedenen Figuren dargestellte Einzelheiten in einem erfindungsgemäßen Wabenkörper im Rahmen der Ansprüche miteinander kombiniert vorkommen können. Es zeigen:
- Fig. 1: schematisch einen Querschnitt durch eine metallischeFolie mit flächigem elektrischem Leiter,
- Fig. 2: eine schematische Ansicht von oben auf eine metallische Folie gemäß Fig. 1 ohne elektrisch isolierende Deckschicht,
- Fig. 3: schematisch eine perspektivische Ansicht eines erfindungsgemäßen Wabenkörpers und
- Fig. 4: schematisch einen perspektivischen Längsschnitt durch einen Teil eines erfindungsgemäßen Wabenkörpers.

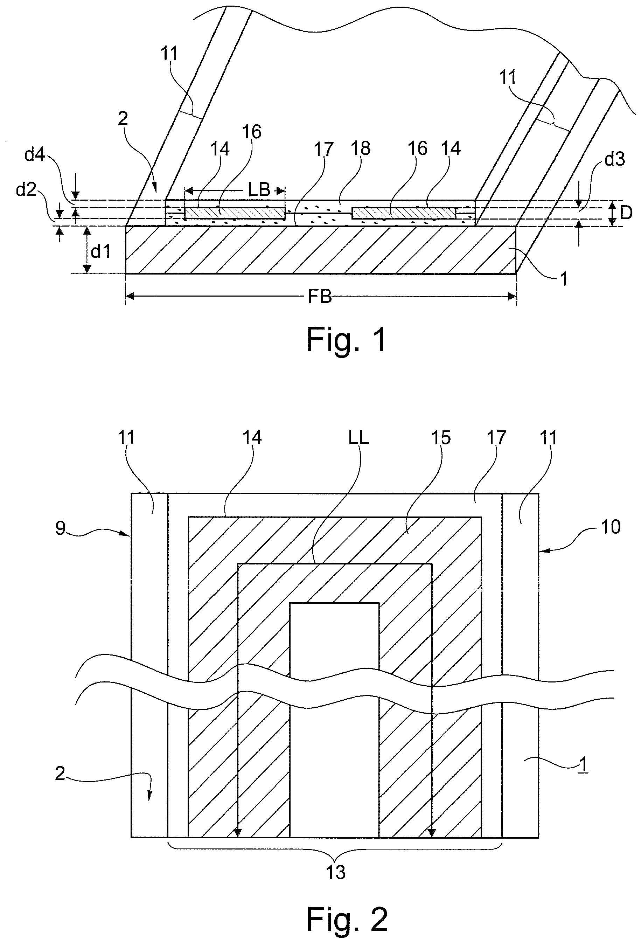

Fig. 1 zeigt in teilweise perspektivischer Ansicht einen Querschnitt durch eine metallische Folie 1 mit einer Oberseite 2. Die metallische Folie 1 hat eine Folienbreite FB von beispielsweise 5 bis 30 cm und eine Foliendicke d1 von beispielsweise 20 bis 100 µm, vorzugsweise 25 bis 50 µm. Auf der Oberseite 2 der metallischen Folie 1 ist unter Freilassung eines Randbereiches 11, vorzugsweise auf beiden Seiten der metallischen Folie 1, eine Basisisolierschicht 17 mit einer Mindestdicke d2 von z. B. 10 bis 20 µm aufgebracht, auf der wiederum ein flächiger elektrischer Leiter 14 angeordnet ist, der beispielsweise in U-Form oder mäanderförmig verläuft. Der elektrische Leiter 14 hat eine Breite LB von z. B. 1 bis 3 cm und eine mittlere (hier nicht dargestellte) Länge LL von z. B. 20 bis 100 cm und eine Dicke d3 von beispielsweise 5 bis 20 µm. Das Produkt aus Leiterbreite LB und Leiterdicke d3 ergibt den schraffiert dargestellten Leiterquerschnitt 16. Basisisolierschicht 17 und elektrischer Leiter 14 sind von einer elektrisch isolierenden Deckschicht 18 mit einer Mindestdicke d4 von z. B. 10 bis 20 µm abgedeckt. Unter Mindestdicke wird jeweils die Schichtdicke d2, d4 auf und unter dem elektrischen Leiter 14 verstanden, die ausreichen muss, um elektrische Durchschläge bei 24, 36 oder 48 V Versorgungsspannung sicherzustellen.

Fig. 2 zeigt eine Ansicht von oben auf die in Fig. 1 dargestellte metallische Folie 1 unter Weglassen der Deckschicht 18. Der elektrische Leiter 14 verläuft bei diesem Beispiel in U-Form, wodurch er eine mittlere Länge LL von fast der doppelten Länge der metallischen Folie 1 hat. Bei einem mäanderförmig auf der metallischen Folie 1 hin und zurück verlaufendem Leiter kann daher eine fast beliebige Länge des elektrischen Leiters 14 eingestellt werden. Die schraffiert dargestellte Leiterfläche 15 des elektrischen Leiters 14 bedeckt z. B. 10 bis 80 % der Oberseite 2 der : metallischen Folie 1. Die Basisisolierschicht 17 lässt im vorliegenden Beispiel auf beiden Seiten der metallischen Folie 1 je einen Randbereich 11 frei, die später bei Verwendung der metallischen Folie 1 zum Bau eines Wabenkörpers an einer ersten Stirnseite 9 und einer zweiten Stirnseite 10 zu liegen kommen. Nur ein innerer Bereich 13 der metallischen Folie 1 ist durch den elektrischen Leiter 14 und dessen Isolierschichten 17, 18 verdickt.

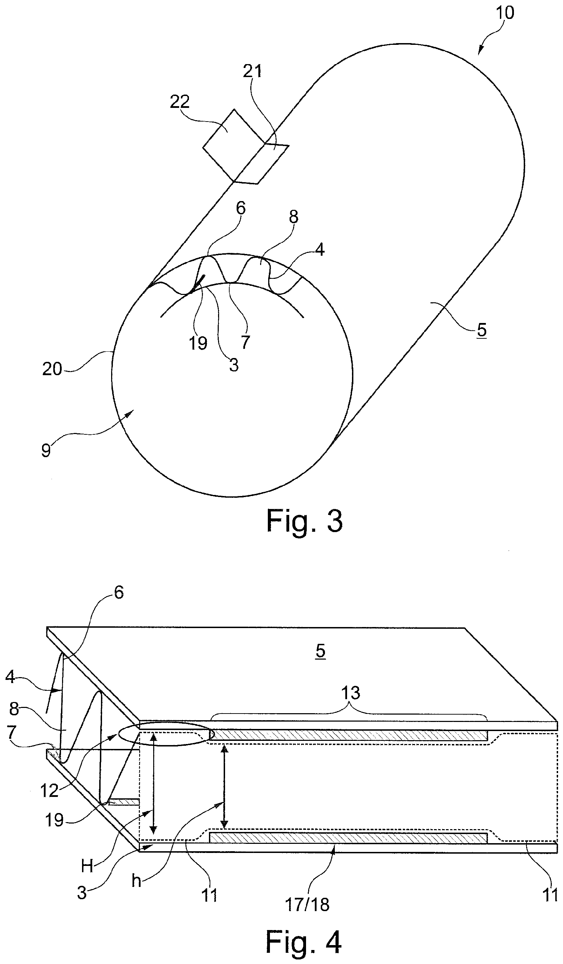

Fig. 3 zeigt schematisch in perspektivischer Ansicht einen erfindungsgemäßen Wabenkörper 5 mit einer ersten Stirnseite 9 und einer zweiten Stirnseite 10. Durch glatte 3 und gewellte 4 metallische Folien gebildete Kanäle 8 ermöglichen, dass der Wabenkörper 5 von der ersten Stirnseite 9 zur zweiten Stirnseite 10 von einem Gas durchströmt werden kann. Die gewellten metallischen Folien 4 bilden Wellenberge 6 und Wellentäler 7, die an den Stirnseiten die benachbarten glatten metallischen Folien 3 berühren und dort zumindest teilweise durch Lötverbindungen 19 verbunden sind. Der Wabenkörper 5 ist in einem Mantelrohr 20 angeordnet, durch welches an einer Durchführung 21 die elektrische Verbindung zwischen einem elektrischen Anschluss 22 und dem mindestens einen elektrischen Leiter 14 im Inneren des Wabenkörpers 5 hergestellt werden kann.

Fig. 4 zeigt schematisch ein bevorzugtes Ausführungsbeispiel der Erfindung, bei dem mindestens eine glatte metallische Folie 3 mit einem zwischen Isolierschichten 17, 18 angeordneten (hier nicht dargestellten) elektrischen Leiter benachbart zu einer gewellten metallischen Folie 4 angeordnet ist. Der gezeigte Längsschnitt durch einen Teil eines Wabenkörpers 5 veranschaulicht, dass die Wellung der gewellten metallischen Folie 4 zwei unterschiedliche Wellhöhen H und h aufweist, nämlich eine Wellhöhe H in einem Randbereich 12 der gewellten metallischen Folie 4 und eine verringerte Wellhöhe h in einem inneren Bereich 13 des Wabenkörpers 5, in dem die glatte metallische Folie 3 mit den Isolierschichten 17, 18 (und den nicht dargestellten elektrischen Leiter) dicker ist als in ihrem Randbereich 11. Durch die unterschiedlichen Wellhöhen H und h können sich die glatten 3 und die gewellten 4 metallischen Folien in dem Wabenkörper 5 an den Stirnseiten berühren, was eine Verbindung durch Lötstellen 19 erlaubt. So entsteht ein stabiler elektrisch beheizbarer Wabenkörper 5.

Die vorliegende Erfindung eignet sich besonders zum Einsatz in Abgasreinigungsanlagen von Kraftfahrzeugen, insbesondere bei einer Stromversorgung mit 24, 36 oder 48 V und ist kaum anfällig für elektrische Überschläge, beispielsweise im Falle von Ablagerungen oder Korrosion.

## Patentansprüche

1. Von einem Gas von einer ersten Stirnseite (9) zu einer zweiten Stirnseite (10) durchströmbarer Wabenkörper (5), hergestellt unter Verwendung mindestens einer metallischen Folie (1), mit einer Oberseite (2) und einem durch eine Basisisolierschicht (17) elektrisch isoliert darauf angebrachten, flächigen elektrischen Leiter (14) mit einer den flächigen elektrischen Leiter (14) abdeckenden elektrisch isolierenden Deckschicht (18), wobei die metallische Folie (1) mindestens einen Randbereich (11) ohne flächigen elektrischen Leiter (14) und ohne Isolierschichten (17, 18) aufweist und wobei die Gesamtdicke (D) des flächigen elektrischen Leiters (14) mit Isolierschichten (17, 18) kleiner 80 µm ist; und unter Verwendung mindestens einer weiteren glatten (3) und/oder gewellten (4) metallischen Folie durch Wickeln und/oder abwechselndes Schichten der metallischen Folien (1, 3, 4), wobei die metallischen Folien (1, 3, 4) an mindestens einer Stirnseite (9, 10) des Wabenkörpers (5) untereinander durch eine Lötverbindung (19) verbunden sind, **dadurch gekennzeichnet, dass** die mindestens eine metallische Folie (1) mit flächigem elektrischem Leiter (14) eine glatte Folie (3) ist, die zusammen mit mindestens einer benachbart angeordneten gewellten metallischen Folie (4) mit Wellenbergen (6) und Wellentälern (7) den Wabenkörper (5) mit von Gas durchströmbaren Kanälen (8) bildet, wobei die mindestens eine gewellte metallische Folie (4) in einem inneren Bereich (13), in dem die glatte metallische Folie (3) mit dem elektrischen Leiter (14) und dessen Isolierungen (17, 18) dicker ist, eine um diese Gesamtdicke (D) verringerte Wellhöhe (h) hat als in einem Randbereich (12) der gewellten metallischen Folie (4), so dass sich im Randbereich (12) der gewellten metallischen Folie (4) an den Wellenbergen (6) und den Wellentälern (7) metallische Kontakte mit dem Randbereich (11) der glatten metallischen Folie (3) ergeben, die durch Lötverbindungen (19) verbunden werden können.

2. Wabenkörper (5) nach Anspruch 1, wobei mehrere glatte und gewellte metallische Folien (3, 4), von denen mindestens eine einen elektrischen Leiter (14) aufweist, abwechselnd aufeinander geschichtet und untereinander verschlungen den Wabenkörper (5) bilden.

## Claims

1. Honeycomb body (5) through which a gas can flow from a first end side (9) to a second end side (10), produced using at least one metallic film (1) having a top side (2) and a flat electrical conductor (14), attached thereto in an electrically insulated manner by a base insulation layer (17), having a cover layer (18) covering the flat electrical conductor (14) in an electrically insulating manner, wherein the metallic film (1) has at least one edge region (11) without the flat electrical conductor (14) and without insulating layers (17, 18), and wherein the total thickness (D) of the flat electrical conductor (14) together with the insulating layers (17, 18) is less than 80 µm; and using at least one further smooth metallic film (3) and/or corrugated metallic film (4) by coiling and/or alternately layering the metallic films (1, 3, 4), wherein the metallic films (1, 3, 4) are connected to one another on at least one end side (9, 10) of the honeycomb body (5) by means of a soldered connection (19), **characterized in that** the at least one metallic film (1) with the flat electrical conductor (14) is a smooth film (3) which, together with at least one corrugated metallic film (4) which is arranged adjacent and has corrugation crests (6) and corrugation troughs (7), forms the honeycomb body (5) with channels (8) through which gas can flow, wherein, in an inner region (13) in which the smooth metallic film (3) with the electrical conductor (14) and the insulations (17, 18) thereof is thicker than in an edge region (12) of the corrugated metallic film (4), the at least one corrugated metallic film (4) has a corrugation height (h) which is reduced by said total thickness (D), and therefore, in the edge region (12) of the corrugated metallic film (4) at the corrugation crests (6) and the corrugation troughs (7), metallic contacts with the edge region (11) of the smooth metallic film (3) are produced and can be connected by means of soldered connections (19).

2. Honeycomb body (5) according to Claim 1, wherein a plurality of smooth and corrugated metallic films (3, 4), of which at least one has an electrical conductor (14), layered alternately on one another and interlaced with one another, form the honeycomb body (5).

## Revendications

1. Corps en nid d'abeille (5) à travers lequel un gaz peut s'écouler d'une première face frontale (9) à une deuxième face frontale (10) et qui est réalisé à l'aide d'au moins une feuille métallique (1), ledit corps comprenant une face supérieure (2) et un conducteur électrique (14) sensiblement bidimensionnel qui est monté sur une couche de base isolante (17) et isolé électriquement de celle-ci et qui comprend une couche de recouvrement (18) électriquement isolante recouvrant le conducteur électrique (14) sensiblement bidimensionnel, la feuille métallique (1) comportant au moins une région de bord (11) sans conducteur électrique (14) sensiblement bidimensionnel et sans couches isolantes (17, 18) et l'épaisseur totale (D) du conducteur électrique (14) sensiblement bidimensionnel pourvu des couches isolantes (17, 18) étant inférieure à 80 µm et à l'aide d'au moins une autre feuille métallique lisse (3) et/ou ondulée (4) par enroulement et/ou revêtement alterné des feuilles métalliques (1, 3, 4), les feuilles métalliques (1, 3, 4) étant reliées les unes aux autres par une liaison soudée (19) sur au moins une face frontale (9, 10) du corps en nid d'abeille (5), **caractérisé en ce que** l'au moins une feuille métallique (1) pourvue d'un conducteur électrique (14) sensiblement bidimensionnel est une feuille lisse (3) qui forme, conjointement avec au moins une feuille métallique ondulée (4) disposée de manière adjacente et pourvue de crêtes d'ondulation (6) et de creux d'ondulation (7), le corps en nid d'abeille (5) pourvu de canaux (8) à travers lesquels le gaz peut s'écouler, l'au moins une feuille métallique ondulée (4) ayant, dans une zone intérieure (13) dans laquelle la feuille métallique lisse (3) pourvue du conducteur électrique (14) et de son isolant (17, 18) est plus épaisse, une hauteur d'ondulation (h) qui est réduite de cette épaisseur totale (D) par rapport à une zone de bord (12) de la feuille métallique ondulée (4), de manière à obtenir, dans la zone de bord (12) de la feuille métallique ondulée (4), au niveau des crêtes d'ondulation (6) et des creux d'ondulation (7), des contacts métalliques avec la zone de bord (11) de la feuille métallique lisse (3), lesquels peuvent être reliés par des liaisons soudées (19).

2. Corps en nid d'abeille (5) selon la revendication 1, une pluralité de feuilles métalliques lisses et ondulées (3, 4), dont l'une au moins comporte un conducteur électrique (14), formant le corps en nid d'abeille (5) en étant placées en couches alternativement les unes sur les autres et en étant entrelacées les unes avec les autres.
